# DEMANDE DE BREVET EUROPEEN

(11) **EP 0 946 081 A1**
(43) Date de publication de la demande: **29.09.1999**
(21) Numéro de dépôt: 99400718.5
(22) Date de dépôt: 24.03.1999
(51) Int. Cl.: H05B 41/29, H05B 41/04

(54) **Dispositif pour l'alimentation d'une lampe à décharge de projecteur de véhicule automobile**

(30) Priorité: 27.03.1998 FR 9803815
(71) Demandeur: VALEO VISION, 93000 Bobigny (FR)
(72) Inventeur: Albou, Pierre, 75013 Paris (FR)
(74) Mandataire: Le Forestier, Eric

(57) **Abrégé**

Dispositif d'alimentation d'une lampe à décharge, notamment de projecteur automobile, du type à amorçage par impulsion comportant un convertisseur continu/alternatif, ainsi qu'un dispositif d'amorçage qui comporte un transformateur dont un enroulement secondaire est destiné à être monté en série avec la lampe à décharge aux bornes de sortie du convertisseur, caractérisé en ce qu'il comporte en outre une branche qui est montée en parallèle sur ledit enroulement secondaire et qui, à la fréquence du régime d'entretien de l'arc de la lampe, présente une impédance inférieure a celle dudit enroulement, de sorte que le courant circule alors principalement dans ladite branche.

## Description

La présente invention est relative aux dispositifs pour l'alimentation d'une lampe à décharge, notamment de projecteur automobile, du type à amorçage par impulsion.

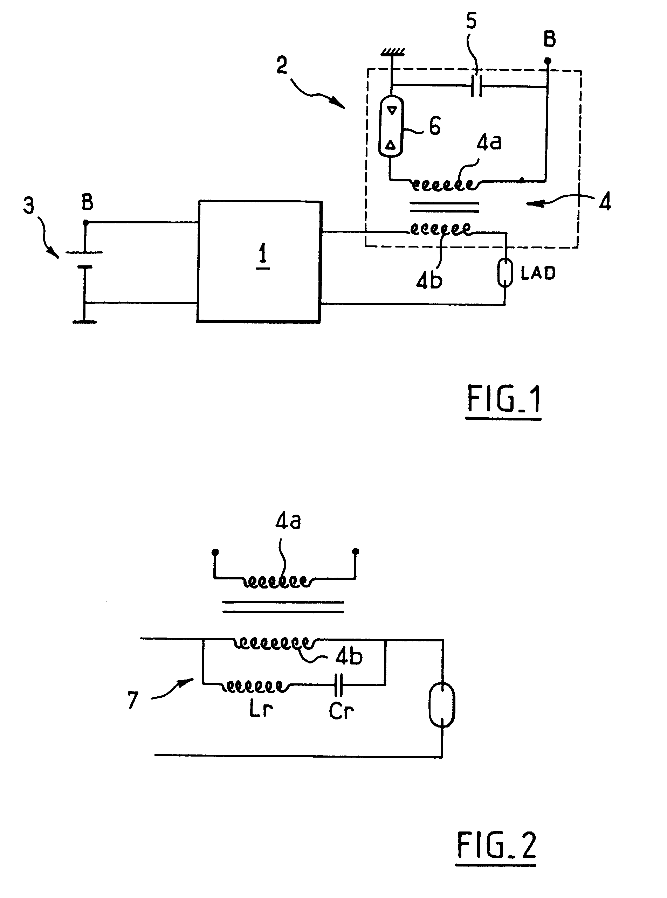

Classiquement, un circuit d'alimentation d'une lampe à décharge (circuit appelé "ballast" par l'Homme du Métier) comporte un convertisseur continu/alternatif, ainsi qu'un circuit d'amorçage. Pour une présentation d'un exemple de circuit d'alimentation de lampes à décharge, on pourra par exemple avantageusement se référer à EP 567 408. Un circuit d'alimentation du même type a été illustré sur la figure 1, sur laquelle le convertisseur a été référencé par 1 et le circuit d'amorçage par 2. On a également représenté sur cette figure 1 une batterie 3 alimentant en tension le convertisseur 1, ainsi que la lampe à décharge LAD.

Le convertisseur 1 permet, une fois la lampe LAD amorcée, et après une phase de chauffage de ses électrodes, d'entretenir l'arc de la lampe au moyen d'un courant alternatif qui est régulé pour que la puissance transmise à la lampe soit sensiblement constante.

Le circuit d'amorçage 2 a pour fonction de générer une impulsion Haute Tension (de l'ordre de 12 à 25 kV) qui réalise le claquage de la lampe et crée l'arc électrique dans celle-ci.

Généralement, ce circuit d'amorçage 2 comporte, ainsi qu'on l'a illustré sur la figure 1, un transformateur 4 dont le secondaire, référencé par 4b, est monté en série avec la lampe à décharge LAD entre les bornes de sortie du convertisseur 1 et dont le primaire, référencé par 4a, est quant à lui monté en série avec un condensateur 5 et un élément de type éclateur 6.

Le condensateur 5 se charge jusqu'au claquage de l'éclateur. Lorsque l'éclateur 6 a amorcé, le condensateur 5 se décharge dans l'enroulement primaire 4a et génère au secondaire l'impulsion Haute Tension recherchée.

En variante, il est également connu de remplacer l'éclateur par un interrupteur commandé, le condensateur S n'étant alors pas nécessairement présent.

Que le circuit primaire comporte un éclateur ou un interrupteur commandé, le transformateur du circuit d'amorçage doit être dimensionné :
- pour d'une part permettre la génération d'une impulsion qui ne doit pas être d'une durée trop brève (50 ns ou supérieure), afin d'éviter les phénomènes d'ionisation et les rayonnements électro-magnétiques dus aux hautes fréquences
- et pour d'autre part assurer un bon couplage avec le secondaire et éviter les pertes de tension qui imposeraient au primaire des tensions de charge plus importantes et augmenteraient les dimensionnements de l'éclateur ou de l'interrupteur.

Pour cette raison, les enroulements au primaire et au secondaire présentent un nombre de tours important, de sorte que l'inductance au secondaire du circuit d'amorçage est généralement élevée, notamment de l'ordre de 1mH ou supérieure.

Une telle inductance est tout à fait acceptable dans le cas où, dans la phase d'entretien de l'arc de la lampe à décharge, le courant alternatif transmis à la lampe est d'une fréquence nominale de l'ordre de quelques kHz.

Par contre, pour des fréquences plus importantes (qui sont souhaitées pour permettre notamment de diminuer les dimensionnements de transformateurs utilisés dans les convertisseurs continu/alternatif), cette impédance réactive à un effet de diviseur de tension aux bornes de la lampe à décharge, ce qui oblige à augmenter la tension en sortie du convertisseur continu/alternatif et donc à sur-dimensionner celui-ci. En outre, le courant HF qui traverse l'inductance du secondaire est alors la source de pertes importantes dans le transformateur.

Le but de l'invention est donc de pallier ces inconvénients et de proposer un dispositif d'alimentation d'une lampe à décharge à amorçage par impulsion qui est d'un coût et d'un encombrement réduits.

Une solution pourrait consister à disposer en série avec l'inductance du secondaire un condensateur choisi pour qu'à la fréquence fondamentale du courant délivré par le convertisseur 1, l'impédance de ce condensateur compense celle de l'inductance, cette fréquence fondamentale étant la fréquence de résonance de l'ensemble condensateur/inductance.

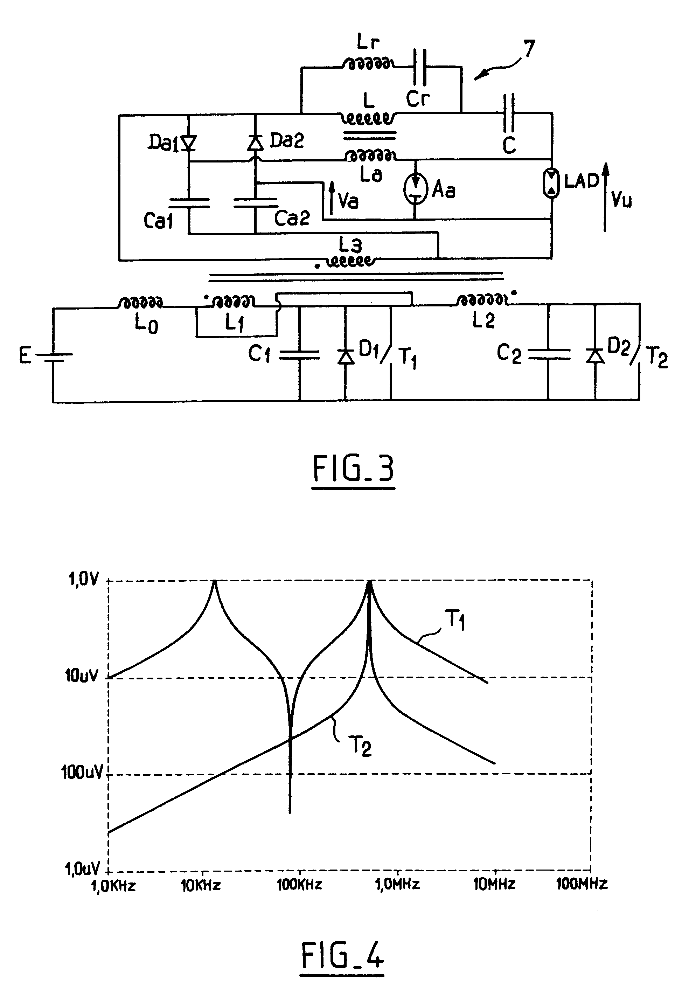

Toutefois, cette solution n'est pas satisfaisante car elle conduit à choisir un condensateur de faible capacité et donc un facteur de qualité élevé pour le circuit résonant. Pour une tension donnée en sortie du convertisseur, la tension aux bornes de la lampe à décharge décroît alors très brutalement de part et d'autre de la fréquence de résonance, ce qui rend le fonctionnement difficile à maîtriser (c.f. courbe T₂ qui est représentée sur la figure 4).

L'invention propose quant à elle un dispositif d'alimentation d'une lampe à décharge, notamment de projecteur automobile, du type à amorçage par impulsion comportant un convertisseur continu/alternatif, ainsi qu'un dispositif d'amorçage qui comporte un transformateur dont un enroulement secondaire est destiné à être monté en série avec la lampe à décharge aux bornes de sortie du convertisseur, caractérisé en ce qu'il comporte en outre une branche qui est montée en parallèle sur ledit enroulement secondaire et qui, à la fréquence du régime d'entretien de l'arc de la lampe, présente une impédance inférieure à celle dudit enroulement, de sorte que le courant circule alors principalement dans ladite branche.

Ce dispositif est avantageusement complété par les différentes caractéristiques suivantes, prises seules ou selon toutes leurs combinaisons techniquement possibles :
- cette branche comporte des moyens inductifs et des moyens capacitifs ;
- il comporte également d'autres moyens capacitifs montés en série avec l'ensemble constitué par d'une part la lampe à décharge et d'autre part l'enroulement secondaire et la branche montée en parallèle sur celui-ci ;
- l'inductance et la capacité des moyens capacitifs et inductifs sont choisis pour que la fréquence du courant en régime d'entretien de l'arc de la lampe corresponde à la fréquence de résonance de l'ensemble monté en sortie du convertisseur ;
- la fréquence du courant en régime d'entretien de l'arc de la lampe est de l'ordre de 1 MHz.

D'autres caractéristiques et avantages de l'invention ressortiront encore de la description qui suit. Cette description est purement illustrative et non limitative. Elle doit être lue en regard des dessins annexés sur lesquels :
- la figure 1, déjà analysée, est une représentation schématique d'un dispositif d'alimentation de lampe à décharge connu de l'art antérieur ;
- la figure 2 est un schéma illustrant le principe de l'invention ;
- la figure 3 est schéma d'un mode de réalisation possible du dispositif de la figure 2 ;
- la figure 4 est un graphe sur lequel on a porté la variation de la tension appliquée à la lampe à décharge en fonction de la fréquence du courant délivré par le convertisseur.

Dans l'exemple qui est représenté sur la figure 2 et qui illustre le principe de l'invention, il est monté aux bornes de l'enroulement secondaire 4b une branche 7 qui comporte en série une inductance Lr et un condensateur Cr.

Les valeurs inductive et capacitive de ces deux éléments sont choisies de façon qu'à la fréquence fondamentale du courant délivré par le convertisseur 1 pendant la phase d'entretien de l'arc de la lampe LAD, l'impédance de cette branche 7 soit très faible devant celle de l'enroulement 4b. Par exemple, ces valeurs sont choisies de façon ladite fréquence fondamentale corresponde à la fréquence de résonance de ladite branche 7.

Ainsi, pendant cette phase d'entretien, le courant à la fréquence fondamentale ne circule plus dans l'enroulement 4b, mais dans la branche 7. Toute la tension en sortie du convertisseur 1 est appliquée à la lampe à décharge ; il n'y a aucune perte dans le transformateur 4.

Un exemple détaillé d'un mode de réalisation possible pour un dispositif d'alimentation conforme à l'invention est illustré sur la figure 3. Dans ce mode de réalisation, le convertisseur 1 est un montage push-pull, alimenté par une source E de tension continue qui est par exemple la batterie.

Ce montage comprend un primaire qui comporte en série aux bornes de la source E, une inductance LO, un premier enroulement primaire L1 et un sous circuit qui comporte en parallèle un condensateur C1, une diode D1 et un interrupteur constitué par un transistor T1 par exemple de type MOSFET, la diode D1 étant passante de la source E vers l'enroulement primaire L1. La source E polarise la diode D1 en inverse. Cette diode est généralement la diode intrinsèque du transistor MOSFET T1.

Ce sous-circuit est également monté en parallèle avec un deuxième enroulement primaire L2 en série avec un deuxième sous circuit qui comporte en parallèle un condensateur C2, une diode D2 et un interrupteur constitué par un transistor T2, la diode D2 étant passante de la source E vers l'enroulement primaire L2.

Les enroulements L1 et L2 sont couplés par mutuelle induction à un enroulement secondaire L3 aux bornes duquel est monté un doubleur de tension. Celui-ci comporte deux diodes Da1 et Da2 et deux condensateurs Ca1 et Ca2.

L'anode de la diode Da1 et la cathode de la diode Da2 sont reliées à une même extrémité de l'enroulement L3. Les condensateurs Ca1 et Ca2 sont respectivement montés entre d'une part l'autre extrémité de l'enroulement L3 et d'autre part la cathode de la diode Da1 et l'anode de la diode Da2. Le primaire du circuit d'amorçage est monté entre les points communs à la diode Da1 et au condensateur Ca1 d'une part et à la diode Da2 et au condensateur Ca2 d'autre part.

Sur cette figure 3, ce primaire comporte un enroulement La en série avec un éclateur Aa.

Cet enroulement La (qui correspond à l'enroulement 4b représenté sur la figure 2) est couplé à un enroulement secondaire L (qui correspond à l'enroulement 4b) qui est monté entre le point commun aux diodes Da1 et Da2 et un condensateur C qui est lui-même relié à la lampe à décharge LAD. Celle-ci est reliée à son autre extrémité au point commun entre les condensateurs Ca1 et Ca2. Une branche comportant une inductance Lr et une capacité Cr est montée en parallèle sur l'enroulement secondaire L.

Le fonctionnement du dispositif qui vient d'être décrit est le suivant:

L'ensemble {Ca₁, Ca₂, La, Aₐ} constitue un générateur d'impulsions par décharge de condensateur. Son fonctionnement est classique et son influence limitée à l'impulsion d'amorçage de la lampe.

Egalement, le redresseur double alternance que constitue l'ensemble {Da₁, Ca₁, Da₂, Ca₂} a une influence négligeable en régime établi, notamment pendant la phase d'entretien de l'arc de la lampe.

En phase d'entretien de l'arc de la lampe à décharge, le courant à la fréquence fondamentale passe par la branche Lr, Cr.

On notera, ainsi que l'illustre la figure 4, qu'avec un tel circuit, il est possible de choisir les valeurs de Lr, Cr et la valeur de C pour que les variations de tension aux bornes de la lampe LAD soit moins brutale que dans le cas d'une résonance obtenue uniquement au moyen d'un condensateur mis en série avec l'enroulement secondaire L et la lampe à décharge LAD.

Sur cette figure 4, la courbe T1 représente en fonction de la fréquence la transmittance (vu/vs, où vu est la tension aux bornes de la lampe et vs la tension en sortie du convertisseur) pour
- C=150 nF,
- Lr=25 µH,
- Cr=4 nF,
tandis que la courbe T2 représente en fonction de la fréquence la transmittance dans le cas où la branche Lr, Cr n'existe pas et où C a pour valeur 0,1 nF.

On notera par ailleurs que la branche 7 peut être constituée par autre chose qu'un circuit Lr/Cr.

Il suffit qu'à la fréquence de travail, l'impédance de cette branche 7 soit très faible devant celle de l'enroulement L.

Ainsi, par exemple, le condensateur Cr peut être supprimé.

Toutefois, une structure avec un condensateur et une inductance est préférée pour la branche 7, dans la mesure où elle permet un filtrage du courant délivré à la lampe à décharge LAD (lequel filtrage est souhaitable pour les rayonnements électromagnétiques émis par la lampe LAD).

Egalement, le condensateur C est facultatif. Sa présence est toutefois avantageuse. Notamment, dans le cas où une impulsion d'amorçage n'est pas suffisante pour amorcer la lampe LAD, le rebond qui suit cette impulsion charge ce condensateur C, qui, ainsi chargé, contribue à l'amorçage de la lampe LAD lorsqu'une nouvelle impulsion est envoyée.

Les différents composants du circuit décrit en référence à la figure 3 ont par exemple avantageusement les valeurs suivantes :
Tension de la batterie : 12V
L0 :1uH
L1 :10uH
C1 : 1nF
L2 :10uH
C2 : 1nF
L3: 325uH
rapport de transformation de L1/L3 et de L2/L3 : 5.7
La : 1mH
C : 0.52nF
Lr : 0,1mH
Cr : 0.52nF

Comme on l'aura compris, le circuit qui vient d'être décrit présente de nombreux avantages.

Il permet un fonctionnement à haute fréquence avec des faibles pertes par commutation et des faibles flux dans le transformateur.

Il permet également d'utiliser des composants passifs de faible dimensionnement.

Il permet également un filtrage du courant de ligne.

Il n'utilise que peu de transistors de puissance et par conséquent évite les problèmes que peuvent poser des commandes flottantes complexes et fragiles.

Il permet un amorçage par décharge de condensateur, ce qui ne nécessite pas des courants d'alimentation élevés.

Dans l'exemple qui vient d'être décrit, le convertisseur est de type push-pull. Bien entendu, d'autres types de convertisseurs sont envisageables, par exemple des convertisseurs de type à demi-pont quasi-résonnant ou encore de type Flyback.

## Revendications

1. Dispositif d'alimentation d'une lampe à décharge, notamment de projecteur automobile, du type à amorçage par impulsion comportant un convertisseur continu/alternatif, ainsi qu'un dispositif d'amorçage qui comporte un transformateur dont un enroulement secondaire est destiné à être monté en série avec la lampe à décharge aux bornes de sortie du convertisseur, caractérisé en ce qu'il comporte en outre une branche qui est montée en parallèle sur ledit enroulement secondaire et qui, à la fréquence du régime d'entretien de l'arc de la lampe, présente une impédance inférieure à celle dudit enroulement, de sorte que le courant circule alors principalement dans ladite branche.

2. Dispositif selon la revendication 1, caractérisé en ce que cette branche comporte des moyens inductifs et des moyens capacitifs.

3. Dispositif selon l'une des revendications 1 et 2, caractérisé en ce qu'il comporte également d'autres moyens capacitifs montés en série avec l'ensemble constitué par d'une part la lampe à décharge et d'autre part l'enroulement secondaire et la branche montée en parallèle sur celui-ci.

4. Dispositif selon l'une des revendications 2 ou 3, caractérisé en ce que l'inductance et la capacité des moyens capacitifs et inductifs sont choisis pour que la fréquence du courant en régime d'entretien de l'arc de la lampe corresponde à la fréquence de résonance de l'ensemble monté en sortie du convertisseur.

5. Dispositif selon la revendication 4, caractérisé en ce que la fréquence du courant en régime d'entretien de l'arc de la lampe est de l'ordre de 1 MHz.

6. Dispositif selon la revendication 5, caractérisé en ce que les moyens inductifs de la branche montée en parallèle de l'enroulement secondaire présentent une inductance de l'ordre de 0,1 mH.

7. Dispositif selon l'une des revendications 5 ou 6, caractérisé en ce que les moyens capacitifs de la branche montée en parallèle de l'enroulement secondaire présentent une capacité de l'ordre de 0,52 nF.

8. Dispositif selon les revendications 3 et 5, caractérisé en ce que moyens capacitifs montés en série avec l'ensemble constitué par d'une part la lampe à décharge et d'autre part l'enroulement secondaire et la branche montée en parallèle sur celui-ci, présentent une capacité de l'ordre de 0,52 nF.
